# EUROPÄISCHE PATENTSCHRIFT

(11) **EP 2 263 063 B1**
(45) Veröffentlichungstag und Bekanntmachung des Hinweises auf die Patenterteilung: **10.08.2011**
(21) Anmeldenummer: 08735119.3
(22) Anmeldetag: 10.04.2008
(51) Int. Cl.: G01B 11/02, G01B 11/14, H02K 15/085

(54) **VERFAHREN UND VORRICHTUNG ZUM BERÜHRUNGSLOSEN MESSEN EINES VERSATZES DER FUNKTIONSKOMPONENTEN EINES FAHRWEGES EINER MIT EINEM LINEARMOTOR ANGETRIEBENEN MAGNETSCHWEBEBAHN**
METHOD AND APPARATUS FOR THE CONTACTLESS MEASUREMENT OF AN OFFSET OF THE FUNCTIONAL COMPONENTS OF A TRAVEL PATH OF A MAGNETIC LEVITATION RAILWAY DRIVEN BY A LINEAR MOTOR
PROCÉDÉ ET DISPOSITIF DE MESURE SANS CONTACT D'UN DÉCALAGE DE COMPOSANTS FONCTIONNELS D'UN PARCOURS D'UN TRAIN À SUSTENTATION MAGNÉTIQUE ENTRAÎNÉ PAR UN MOTEUR LINÉAIRE

(43) Veröffentlichungstag der Anmeldung: 22.12.2010
(73) Patentinhaber: Draka Cable Wuppertal GmbH, 42369 Wuppertal (DE)
(72) Erfinder: FUNKEN, Peter, 50226 Frechen (DE); ROSIN, Christian, 86934 Reichling (DE); ENGST, Wilhelm, 50996 Köln (DE)
(74) Vertreter: Draudt, Axel Hermann Christian
(86) Internationale Anmeldenummer: PCT/EP2008/002807
(87) Internationale Veröffentlichungsnummer: WO 2009/124565

(56) Entgegenhaltungen:
- DE-A1- 10 011 117
- DE-A1- 19 833 418
- US-A1- 2003 140 509

## Beschreibung

Die Erfindung betrifft ein Verfahren zum berührungslosen Messen mittels Messeinrichtungen, bei dem ein Versatz der Funktionskomponenten eines Fahrweges einer mit einem Linearmotor angetriebenen Magnetschwebebahn mittels mindestens eines entlang des Fahrwegs verfahrbaren optischen Triangulationssystems gemessen wird, wobei mindestens zwei an einem verfahrbaren Träger fest montierte und geometrisch versetzte Triangulationssensoren je Messeinrichtung für die Funktionskomponenten mit einer bestimmbaren Geschwindigkeit entlang des Fahrwegs bewegt werden.

Verwendbar ist hier zu ein laseroptischer Sensor zur berührungslosen Erkennung und Messung der Lage der Motorwicklung im Statorpaket, der relativen Lage der Statorpakete in dem Fahrweg bei der Magnetschwebebahn und/oder der vertikalen- oder horizontalen Versätze der Funktionskomponenten des Magnetschwebefahrzeugs, und zwar auf dem Prinzip der optischen Triangulation.

Das eingangs genannte Verfahren ist zum Beispiel aus der DE 100 11 117 entnehmbar.

Das Prinzip der Triangulation nutzt den Effekt der Lichtstreuung eines senkrecht auf eine Fläche auftretenden Beleuchtungsstrahls aus, indem das diffus reflektierte Licht unter einem bestimmten Beobachtungswinkel von einem optoelektrischen Sensorelement aufgenommen wird. Die Position des auf dem Sensorelement abgebildeten Lichtpunktes wird zur Abstandsbestimmung des Messobjektes ausgewertet. Voraussetzung ist, dass die Objektfläche nicht 100% plan reflektierend (d.h. ein Spiegel) ist, da sonst der Lichtverlauf dem Reflexionsgesetz folgt und eine Beobachtung aus einem schrägen Blickwinkel nicht möglich ist. Im Allgemeinen hängt das Streuverhalten eines Objektes von seiner Oberflächenbeschaffenheit und der Wellenlänge des Lichtes ab. Konventionell befindet sich bei der Triangulation das optoelektronische Sensorelement (z.B. CCD Sensor) in der Bildebene eines Empfangsobjektives und steht meist unter einem Winkel zwischen 30 und 45° zum Beleuchtungsstrahl. Eine Verschiebung des Messpunktes auf dem Objekt in Richtung des Beleuchtungsstrahls hat zur Folge, dass nach den Gesetzen der optischen Abbildung die Lage des Bildpunktes in der Beobachtungsebene wandert. Als Messwert wird die Lage des Bildpunktes detektiert.

Es sind Systeme bekannt, die mittels optischer Triangulation unter Verwendung von industriellen Laserquellen Referenzmessungen zur genauen Lage der Motorwicklung in die Statorpakete einer Magnetschwebebahn, insbesondere eines Transrapids versucht haben. Die nach dieser Methode durchgeführten Messungen mittels der Triangulation mit industriellen Laserquellen und Referenzmessungen der Statorpakete/- Motorwicklungs-Unterkante zu den Anschlussflächen der Funktionskomponenten, (z.B. Statorträger), zwecks Erkennung der Motorwicklung-Lage führten nicht zu den gewünschten Ergebnissen:
Die mögliche Messgeschwindigkeit betrug verfahrensbedingt nur 1-2km/h.
Die Messgenauigkeit war bedingt durch die Wahl der Referenzflächen und der Addition der Fertigungstoleranzen zu gering und lag im Bereich von >4mm.
Die Messungen unter widrigen Witterungsbedingungen, z.B. Nebel, Regen, lieferten ungenaue Werte.
Die Vibrationen des Messfahrzeugs beim Überfahren der Trägerstöße verfälschte lokal die Messergebnisse.

Außerdem waren das Verfahren und die Vorrichtung in der Anwendung begrenzt auf die Erkennung der Lage der Motorwicklung und nicht geeignet für weitere wichtige Anwendungen des Transrapids wie:
Abnahmemessung der Statorpaket-Lage und Motorwicklung-Lage nach erfolgter Installation in den Fahrwegträgern als Qualitätsabnahme hatte eine zu geringe Messgenauigkeit von >4m anstatt <1mm.
Periodische Kontrolle der Lage der Statorpakete über die Versatzmessung zwischen benachbarten Statorpaketen um eventuelle Beschädigungen an der Befestigung festzustellen, da die Messgenauigkeit mit >4m anstatt <1mm zu gering war.
Kontrollmessung der Versätze und Verdrehungen der Seitenführerschienen und/oder Gleitebene der Fahrwegträger am Trägerübergang infolge von Stützensenkungen und/oder Stützenverdrehungen. Kontrollmessung der Versätze und Verdrehungen der Statorpakete am Trägerübergang infolge von Stützensenkungen und/oder Stützenverdrehungen.
Mögliche Integration der Messeinrichtungen direkt in dem Maglev Fahrzeug, da die Messfrequenz viel zu gering war.

Als Fazit ist die Anwendung eines Verfahrens und Vorrichtung nach dem Stand der Technik:
Unwirtschaftlich durch die lange Dauer der Messungen und zu ungenau.
Nur begrenzt tauglich wegen der Funktionstauglichkeit nur bei guten Witterungsverhältnissen.
Ungeeignet für die Abdeckung von mehreren benötigten Messfunktionen des Transrapids.

Aus diesem Grund werden zur Abdeckung aller erforderlichen Messfunktionen mehrere Einrichtungen mit unterschiedlichen Technologien, die zu unterschiedlichen Zeiten die Anlage inspizieren, benötigt.

Der Erfindung liegt daher die Aufgabe zugrunde, ein Verfahren der eingangs genannten Arten anzugeben, die mit technisch einfachen Mitteln es ermöglichen, die Einsatzbreite zu erhöhen und zudem auch noch die Messgeschwindigkeit und -genauigkeit stark zu erhöhen.

Diese Aufgabe wird bei einem Verfahren der eingangs genannten Art erfindungsgemäß dadurch gelöst, dass dabei die Triangulationssensoren alternierend als Mess- und als Referenzsensor arbeiten, und zwar mit einer Strahlenquelle im ultravioletten, sichtbaren oder infraroten Spektralbereich, wobei das diffus reflektierende Licht unter einem bestimmten Beobachtungswinkel aufgenommen und die Position des auf dem Mess-Sensor auftreffenden Lichtes zur Versatzbestimmung verwandt wird, und zwar mit einer Abtastrate, die Messpunkte im Raster < 1,5 mm detektiert.

Der Kern der Erfindung liegt darin, mit Hilfe der Verwendung zweier optischer Triangulationssysteme eine Überprüfung der unerwünschten Versätze mit einer Geschwindigkeit und Genauigkeit durchzuführen, die für eine Hochgeschwindigkeits-Magnetschwebebahn wie z.B. den Transrapid notwendig ist.

Des Weiteren ist es dadurch möglich, durch die Nutzung eines einzigen Grund-Systems für alle erforderlichen Anwendungen deutliche wirtschaftliche Vorteile zu erzielen. Ferner wird die Anwendung sowohl wirtschaftlich als auch logistisch stark vereinfacht.

Eine einzige Inspektion für Statorpaket- und Motorwicklung-Lagekontrolle mit entsprechender Auswertung als ein Beispiel von Funktionskomponenten ist dadurch möglich geworden.

Es ist nämlich in der Regel notwendig, die Motorwicklungslage-Inspektion täglich durchzuführen. Die Inspektion der Statorpakete kann wegen der Redundanz und Befestigung allerdings alle ein bis zwei Wochen ausgewertet werden. Hier ist allerdings die erforderliche Auflösung der Messungen höher als bei der Überprüfung der Motorwicklung-Lage und kann dann gezielt in den Zeiten mit vorteilhaften Witterungsverhältnissen durchgeführt werden.

Ferner ist es mit Hilfe der Erfindung möglich, Inspektionen der Statorpaket-Versätze und Verdrehungen am Trägerübergang durchzuführen. Hier wird der Versatz von benachbarten Statorpaketen am Trägerübergang gemessen, und im Falle von Anomalien kann auf einfache Art und Weise eine Vergleichsauswertung zu früheren Messungen vorgenommen werden.

Ferner können im Verlauf der Betriebsdauer durch Stützensenkungen oder Stützenverdrehungen Versätze der Funktionskomponenten des Transrapidsystems bzw. Magnetschwebebahnsystems über das erlaubte Maß hinaus auftreten. Diese führen bestenfalls zu Komforteinbußen und müssen daher mittels Lagereinstellungen korrigiert werden.

Die Messeinrichtung ist vielseitig anwendbar. So ist es z.B. möglich, an einem konventionell auf Rädern fahrenden Inspektionsfahrzeug oder aber in Sektion des Magnetschwebebahnfahrzeugs selbst anzuordnen.

Des Weiteren ist es mit der Erfindung möglich, eine berührungslose und genaue Bestimmung der Motorwicklung-Lage am Statorpaket der Magnetschwebebahn, eine berührungslose und genaue Bestimmung der relativen und absoluten Lage der Statorpakete innerhalb eines ausgerüsteten Fahrwerkträgers der Magnetschwebebahn, ein berührungsloses und genaues Bestimmen der relativen Versätze der Statorpakete an den Trägerübergängen des Magnetschwebebahnfahrzeuges in vertikaler und horizontaler Richtung sowie ein berührungsloses und genaues Bestimmen der relativen Versätze der Seitenführschienen und der Gleitebenen an den Trägerübergängen des Magnetschwebebahnfahrzeuges in vertikaler und horizontaler Richtung durchzuführen.

Gemäß einer Weiterführung der Erfindung ist es vorgesehen, dass die Funktionskomponenten Statorpakete oder Seitenführungsschienen und Gleitebenen sind und der Träger mit dem Messaufbau entlang verfahren wird.

Zur Bestimmung der Statorpakete-Lage ist es außerdem vorteilhaft, wenn mindestens eine Messposition entlang der Außenseite des Statorpaket-Unterseiten verfahren wird.

Damit für die Benutzung einer Hochgeschwindigkeitsmagnetschwebebahn eine Überprüfung in regelmäßigen Abständen, wie oben bereits erwähnt, logistisch überhaupt sinnvoll durchgeführt werden kann, ist es Vorteil, wenn die Verfahrensgeschwindigkeit des Meßaufbaus mindestens 100 km/h beträgt.

Gemäß einer Weiterbildung der Erfindung ist es vorgesehen, dass mit einem Messabstand zwischen Sensor und Statorpaket kleiner oder gleich 25 cm gemessen wird.

Zur Unterdrückung oder Verhinderung von Verunreinigungen und Umwelteinflüssen ist es vorteilhaft, wenn die bei der Messung verwandten Optiken mit einer Luftausströmung beaufschlagt werden.

Zur Reduzierung von Sonnenlichteinflüssen auf die Messgenauigkeit, ist es vorteilhaft, wenn vor dem Lichteintritt in die Optiken das Licht optisch gefiltert oder durch eine Spaltanordnung geleitet wird.

Es ist selbstverständlich ausreichend, lediglich einen reflektierten Lichtpunkt zur Ermittlung der Versätze zu verwenden. Vorteilhafter ist es aber, wenn ein Lichtschnitt zur Bestrahlung des Statorpakets/Motorwicklung oder Statorpaketversätze oder Seitenführschienenversätze, oder der Schraubenköpfe der Schrauben, die über Traversen die Statorpakete mit den Trägerelementen verbinden, verwendet wird und nur eine Strahlquelle eingesetzt wird sowie die Signaldetektion mit einer CCD Zeile im Beobachtungswinkel 30-45° bezogen auf die Richtung der Anregung erfolgt.

Bezüglich der Schraubköpfe ist dabei zu sagen, dass jedes Statorpaket mittels drei kraftschlüssig eingebauten Traversen und jeweils zwei M-20 Schrauben mit dem Tragwerk befestigt ist. Diese Befestigung besitzt sehr hohe Sicherheitsbeiwerte, da rechnerisch vier Schrauben der Größe M-12 ausreichend wären. Es ist aber dennoch zu bemerken, dass die Schrauben nur infolge von Materialfehlern oder des Verlustes der Vorspannung versagen. Dann entstehen Biegekräfte, die dazu führen können, dass die Schraube bricht. Weil bisher kein System gefunden wurde, dass das sichere Vorhandensein der Schraubvorspannung detektiert, sind Redundanzen in Form einer Schwalbennut eingebaut worden, die sich in dem Beton-/Stahlteil des Tragwerkes befinden. Dadurch wird bewirkt, dass im Falle eines Versagens eines oder mehrer Bolzen, das Statorpaket sich lediglich vertikal um weniger als 2 mm senken kann und in der Redundanz gehalten wird. Bekanntlich ist ein unkontrolliertes Absenken eines Statorpakets über 4-5 mm ein äußerst ernster Gefahrenpunkt, da es dann zu Kollision mit dem Fahrzeug mit all den bereits bekannten Konsequenzen kommt.

Mit der Redundanz hat es folgendes auf sich. Es gibt drei Befestigungsachsen, die jeweils aus Traversen mit jeweils zwei Schrauben M2O bestehen.

Bei Versagen einer Schraube einer beliebigen Traverse offenbart sich nichts, da die anderen Schrauben das Statorpaket weiterhin sicher tragen.

Versagen zwei Schrauben unterschiedlicher Traversen, offenbart sich ebenfalls nichts, da die anderen Schrauben das Statorpaket sicher tragen.

Beim Versagen von zwei Schrauben der mittleren Traverse, offenbart sich nichts, da die anderen Schrauben das Statorpaket weiterhin sicher tragen.

Beim Versagen von zwei Schrauben einer der äußeren Traversen offenbart sich ein Spalt an dieser Traverse, der aber kleiner ist, als für eine Detektion erforderlich wäre.

Erst beim Versagen der Schrauben einer mittleren und einer äußeren Traverse oder aller Schrauben senkt sich das Statorpaket soviel, dass eine Detektion möglich ist. Der Schädigungsprozess schreitet aber immer fort, d.h. nach dem Versagen der Befestigung einer äußeren Achse und einem kleinen Spannungsverlust der anderen Schrauben, ergibt sich ein kleiner Spalt, welcher Biegespannungen zulässt, die nach einiger Zeit die Schrauben benachbarter Traversen des betroffenen Statorpaket nach und nach schädigen.

Die Detektion der Schraubenköpfe kann aber so vonstattengehen, dass lediglich ein Vorhandensein oder Nichtvorhandensein des Kopfes erfasst werden muss, um die notwendigen Maßnahmen früher als in dem Fall der Verwendung von Redundanzen treffen zu können.

Eine derartige Detektion dieser Traversenschrauben kann die Redundanz zur Halterung der Traverse völlig unnötig machen. Daraus folgt, dass mit Hilfe dieses Überprüfens der Schraubenköpfe die Schwebebahntrasse mit erheblich geringerem Aufwand hergestellt werden kann, da dann keine Redundanzteile mit Schwalbenschwanznuten in den Beton- oder Stahltragwerk mehr befestigt werden müssen und auch die Traversen keine diese Schwalbenschwanznut entsprechende Form zu haben brauchen. Es werden dann außerhalb des Statorpaketes im Wesentlichen quaderförmige Traversen Verwendung finden können.

Eine ähnlich vorteilhafte Ausführungsform wie gerade angegeben, ist dadurch möglich, wenn ein Lichtleiterbündel für Beleuchtung und Detektion der Motorwicklungs-Lage am Statorpaket für Statorpaketversätze am Trägerübergang oder Seitenführungsschienenversätze am Trägerübergang oder der Schraubenköpfe der Schrauben, die über Traversen die Statorpakete mit den Trägerelementen verbinden, eingesetzt wird, wobei für sämtliche Sensorelemente nur eine Strahlquelle eingesetzt wird und der Winkel zwischen Anregungs- und Beobachtungsfasern im Bereich von 30-45° liegt.

Des Weiteren kann vorteilhafter Weise vorgesehen werden, dass die Strahlquelle kontinuierlich oder gepulst arbeitet.

Besonders vorteilhaft ist es, wenn die Signaldetektion über ein optoelektrisches Sensorelement erfolgt, wobei das Sensorelement eine CCD oder eine positionsempfindliche Diode ist.

Für das Verfahren der Trägervorrichtung bzw. des Trägers für die Messvorrichtung können verschiedene Möglichkeiten genutzt werden, so ist es z.B. möglich, dass das Sensorsystem auf einem Messfahrzeug oder einer Sektion eines Magnetschwebefahrzeuges zur routinemäßigen Erfassung der Motorwicklungslage oder der Statorpaketversätze am Trägerübergang oder der Seitenführungsschienenversätze am Trägerübergang angeordnet wird.

Ferner sieht eine Weiterentwicklung der Erfindung vor, dass das Sensorsystem das Statorpaket von unten und die Seitenführungsschienen von der Seite beleuchtet werden, wobei beide Funktionen mittels einer einzigen Strahlquele (Lichtleiterbündel) verwendet werden können.

Damit schon beim Bau der einzelnen Stützpfeiler und auch der Fahrwegsteile mit äußerster Präzision gearbeitet werden kann, ist es vorteilhaft, wenn das Sensorsystem zur Vermessung der Statorlage und der Motorwicklungslage direkt bei der Ausrüstung der Fahrwegträger mit den Funktionskomponenten zur Qualitätskontrolle eingesetzt wird.

Zur Überprüfung der Genauigkeit beim Bau der Fahrwege des Magnetschwebebahnfahrweges und auch zur Überprüfung der Arbeitsgenauigkeit des Arbeitspersonals ist es vorteilhaft, wenn das Sensorsystem zur Vermessung der Statorpaketlage, der Seitenführungsschienenversätze, der Gleitebenen und der Motorwicklungslage, oder der Schraubenköpfe der Schrauben, die über Traversen die Statorpakete mit den Trägerelementen verbinden, nach der Errichtung des Fahrwegs auf der Baustelle zur Qualitätskontrolle eingesetzt wird. Sollte für bestimme Zeiten kein Fahrbetrieb durchgeführt werden, z.B. während der Wartungszeiten, so ist es vorteilhaft, wenn das Sensorsystem zur Vermessung der Statorpaketlage, der Seitenführungsschienenversätze und der Motorwicklungslage, oder der Schraubenköpfe der Schrauben, die über Traversen die Statorpakete mit den Trägerelementen verbinden, als Routinemessung vor der Aufnahme des Betriebs mittels des Servicefahrzeugs oder einer Magnetschwebesektion eingesetzt wird.

Bei den gewünschten Messgeschwindigkeiten ist es vorteilhaft, wenn die Strahlenquelle eine Laserquelle ist.

Selbstverständlich ist es möglich, dieses Verfahren für alle Magnetschwebebahnen mit Linearmotorantrieb zu verwenden. Vorteilhaft ist es aber, wenn die Magnetschwebebahn ein Transrapid ist.

Weitere Merkmale und Vorteile der Erfindung ergeben sich aus der folgenden Beschreibung verschiedener Ausführungsbeispiele sowie aus den Figuren, auf die Bezug genommen wird. Es zeigen:
- Fig.1: ein Systemkonzept der Lasertriangulation zur Bestimmung der LSW-Lage an der Magnetschwe- bebahn mit wechselndem Mess- und Referenz- sensor zur gleichzeitigen Messung an zwei Positionen am Statorpaket, und zwar in Fig. 1a als Gesamtansicht und in Fig.1b in einer Seitenansicht;
- Fig.2: ein Lasertriangulationssystem zur Über- wachung der Kabel-Lage im Statorpaket unter Verwendung von Lichtschnitten und einem gepulsten Mikrochiplaser als Strahlquelle;
- Fig.3: ein fasergekoppeltes Lasertriangulations- System zur Überwachung der Kabel-Lage im Statorpaket unter Verwendung von Licht- leiterbündeln und gepulsten Mikrochip- lasern als Strahlquelle;
- Fig.4: ein Diagramm zur Darstellung der Kompen- sation von Erschütterungen/Vibrationen durch abwechselnde Datenaufnahme mit Mess- und Referenzsensor gemäß der Anord- nung von Fig.1 für 20 k/Hz Lasertriagula- tionssensoren, wobei fünf Kabelwicklungen gezeigt sind;
- Fig.5: ein Diagramm zur Darstellung von Lasertri- angulationsmessungen unter extremen Sonnen- licht für fünf Kabelführungen gemäß einer Anordnung von Fig.1 mit 20 k/Hz Elementen; und
- Fig. 6a-c:: eine Unteransicht, eine Seitenansicht sowie eine Perspektivansicht eines Statorpaketes, wie es zurzeit noch verwandt wird.

Mehrere Ausführungsbeispiele des erfindungsgemäßen Verfahrene werden nunmehr an Hand von Vorrichtungen beschrieben, die für das Verfahren verwendbar sind, aber nicht Gegenstand der Erfindung sind.

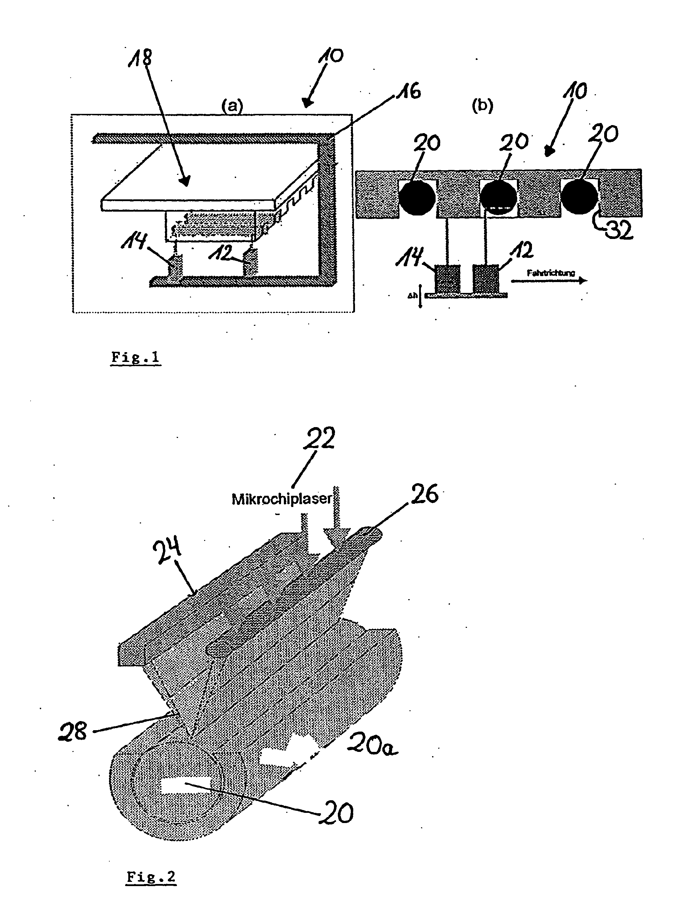

Anhand der Figuren 1 bis 6 werden nunmehr mehrere Ausführungsbeispiele eines Triangulationssystems 10 näher beschrieben. Dabei bedeuten gleiche Bezugszeichen immer gleiche Bauteile, zumindest vom Prinzip her.

Obwohl dies für alle Magnetschwebebahnen gilt, wird bei dieser Beschreibung hier auf die Magnetschwebebahn Transrapid Bezug genommen.

Bei der Überwachung der Lage der Motorwicklung im Statorpaket der Magnetschwebebahn soll eine Inspektion der möglichen Höhenverschiebung der Statorkabel 20 an mindestens zwei verschiedenen Positionen quer zum Statorpaket erfolgen. Die Geschwindigkeit des Inspektionsfahrzeuges und somit die der Messung soll mindestens 100 kmh⁻¹ betragen. Die Tiefenauflösung beträgt <1mm, das entspricht der Messgenauigkeit der Motorwicklungslage in vertikaler Richtung. Soll eine Ortsauflösung von <1mm erreicht werden, so muss die Zeitauflösung des Lasertriangulationssensors » 30 kHz betragen.

Das Konzept der optischen Triangulation zur Bestimmung der LSW-Lage bzw. der Lage der Statorkabel 20 bei der Magnetschwebebahn ist in der Fig.1 gezeigt.

Es werden mindestens zwei Sensoren 12 und 14 verwendet, die abwechselnd als Mess- und Referenzsensor arbeiten.

Da der Abstand zwischen den einzelnen Kabelführungen 20a auf die Länge eines Fahrwegträgers quasi konstant ist, kann dieses einfach durch einen fest eingestellten Versatz zwischen beiden Sensoren 12 und 14 erfolgen.

Die Sensoren 12 und 14 sind jeweils auf die Außenseiten der Statorpakete ausgerichtet, so dass die Lage der Kabel 20 im Statorpaket eindeutig mit zwei Lasersensoren 12 und 14 bestimmt werden kann, ohne dass ein weiterer Sensor zu Referenzmessungen für die Kompensation mechanischer Schwankungen des Messfahrzeuges oder Vibrationen eingebaut werden muss.

Die Daten der Sensoren 12,14 werden über eine AD Karte ausgelesen und in einem sich auf dem Messfahrzeug befindlichen Rechner, z.B. ein Notebook, durch einfache Differenzbildung ausgewertet.

Da jede Statornut 32, die ein Statorkabel 20 aufnimmt, vermessen wird, können die jeweiligen Statornuten 32 einfach durchnummeriert werden und die gemessenen Kabelpositionen als absolute Werte annehmen, so dass jeden Statorkabel 20 eine absolute Lage im mm zugewiesen werden kann.

Mit Hilfe dieser Auswertung wird ein Messprotokoll erstellt, welches es unmittelbar (zeitnah) gestattet, die LSW-Lage jeder einzelnen Kabelführung zu überwachen und zu dokumentieren. Bei Vorgabe einer entsprechenden Toleranz kann so unmittelbar ein Alarm ausgegeben werden, wenn die Position den vorgeschriebenen Grenzwert übersteigt. Dieses Messprinzip kann sowohl bei der täglichen Inspektion als auch für die Qualitätskontrolle bei der Integration der Funktionskomponenten des Fahrwegs 18 wie Statorpakete, Motorwicklung etc. eingesetzt werden.

Alternativ kann anstelle von mehreren individuellen Sensoren 12,14 ein einzelnes Sensorelement pro Statorpaket 34 eingesetzt werden. Hierzu wird der Laserstrahl über eine Zylinderlinsenoptik 26 nicht punktförmig, sondern strichförmig auf das Statorpaket 34 abgebildet. Mit geeigneten Objektiven kann nun aus der Fokusebene jeweils ein Punkt auf einen Detektor, z.B. CCD Kamera oder CCD Zeile 24, abgebildet werden und so die Lage der Statorkabel 20 in dem Statorpaket 34 nach dem oben beschriebenen Prinzip der Triangulation vermessen werden.

Die Höhenauflösung beträgt problemlos <1 mm und die Zeitauflösung mindestens 30 kHz. Der Vorteil dieser Anordnung liegt darin, dass nur eine Lichtquelle 22 benötigt wird, eine größere Anzahl von Messpunkten gleichzeitig vermessen werden kann und Zeitauflösungen von deutlich über 20 kHz erreicht werden können. Das Prinzip dieses Ansatzes ist in der Fig.2 gezeigt.

Eine weitere Alternative gegenüber bisher bekannten Systemen besteht in der Verwendung von Lichtleitbündeln 30 zur Aufteilung der Laserlichtquelle 22. Die einzelnen Fasersensoren beleuchten dann jeweils einzelne Positionen auf dem Statorpaket 34, und Positionsverschiebungen werden dann mittels positionsempfindlicher Detektoren (PSD) detektiert. Da es sich hier um Analogsignale handelt, ist das Erreichen von Ortsauflösungen <1 mm ebenfalls kein technisches Problem.

Ein Vorteil des Einsatzes von Mikrochiplasern 22 gegenüber den konventionell eingesetzten Diodenlasern ist die vergleichsweise wesentlich höhere Ausgangsleistung, die gepulste Strahlung und die Verwendung von Wellenlängen im infraroten Spektralbereich, die so relativ einfach eine Unterdrückung des Tageslichtes bei der Signalaufnahme ermöglichen.

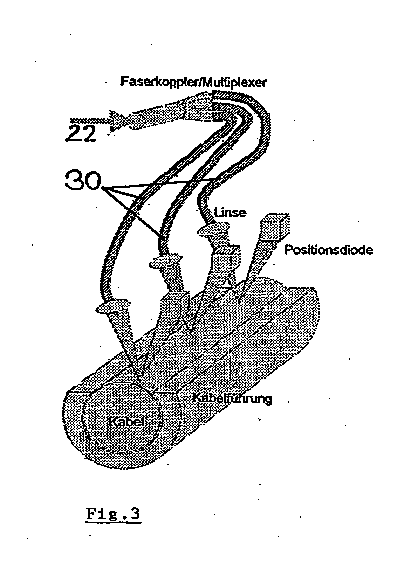

Das Prinzip dieser Anordnung ist in der Fig.3 gezeigt. Es ermöglicht zudem durch Einsatz der Lichtleiter 30, die Statorpakete der auf beide Seiten des Fahrwegs integrierte Linearmotoren des Transrapid mit nur einer einzigen Laserlichtquelle 22 zu versorgen.

Die Genauigkeit der optischen Triangulation an bewegten Messobjekten hängt wesentlich von der Abtastrate der eingesetzten Sensoren 12,14 ab. Bei dieser Anwendung soll eine Mindestgeschwindigkeit von 100 kmh⁻¹ erreicht werden. Eine 20 kHz Abtastrate ergibt für eine Geschwindigkeit des Messfahrzeuges von beispielsweise 120 kmh⁻¹ die Aufnahme von Messpunkten im Raster von 1,7mm. Der typische Messabstand zwischen Sensor 12,14 und Messobjekt beträgt 15cm.

Ein weiterer Problembereich, welcher durch die erfindungsgemäßen Verfahren gerade auch im Hinblick auf die praktische Anwendung gelöst wird, betrifft die Ausschaltung des Einfluss von Regen bzw. Nebel auf die Messgenauigkeit der Triangulation. Es wird im Normalfall eine drastische Verschlechterung der aufgezeichneten Messsignale beobachtet. Das Untergrundsignal, z.B. das Rückstreusignal von der Statorpaketoberfläche, ist wesentlich verrauschter gegenüber einer trockenen Oberfläche, und die beiden Kabelpositionen, Signal und Referenz, können nicht mehr exakt aufgelöst werden. Eine Erklärung ist die zusätzlich Streuung der Laserstrahlung an den Wassertröpfchen in der Luft auf dem Weg zwischen Oberfläche und Sensorelement.

Erfindungemäß kann hier die Abhilfe auf verschiedene Weisen und durch deren Kombination erfolgen:
- Verwendung einer Laserwellenlänge, die in den infraroten Spektralbereich verschoben ist, hier ist der Anteil von Mie-und Rayleigh-Streuung im Vergleich zu der verwendeten Laserstrahlung bei 650nm deutlich geringer,
- Verringerung des Abstandes des Lasers zur Messfläche, dann sind weniger Streuprozesse mit Wassertröpfchen möglich,
- Verwendung eines System mit erhöhter Abtastrate, wodurch über eine größere Anzahl von Messpunkten gemittelt werden kann und somit die gestreuten Signale nicht mehr so stark ins Gewicht fallen.

Die anschließenden Streuversuche unter Sprühnebelbedingungen mit verschiedenen Wellenlängen 650nm, 1064nm und 1550nm zeigen, dass für Infrarot verschobene Wellenlängen eine Verbesserung der Messergebnisse um bis zu 20% erzielt werden kann.

Für die praxisbezogene Umsetzung des Messverfahrens beim Transrapid wurden optimierte Messabstände und eine hohe Abtastraten zur Problemlösung erfolgreich eingesetzt.

Die Beeinflussung der erzielbaren Messgenauigkeit in Abhängigkeit mechanischer Vibrationen ist für Anwendungen am Transrapid ebenfalls von großer Bedeutung. Die entwickelte Versuchsanordnung mit mindestens zwei versetzten Sensoren gemäß Fig.1 zeigt für induzierte Vibrationen keine Beeinflussung.

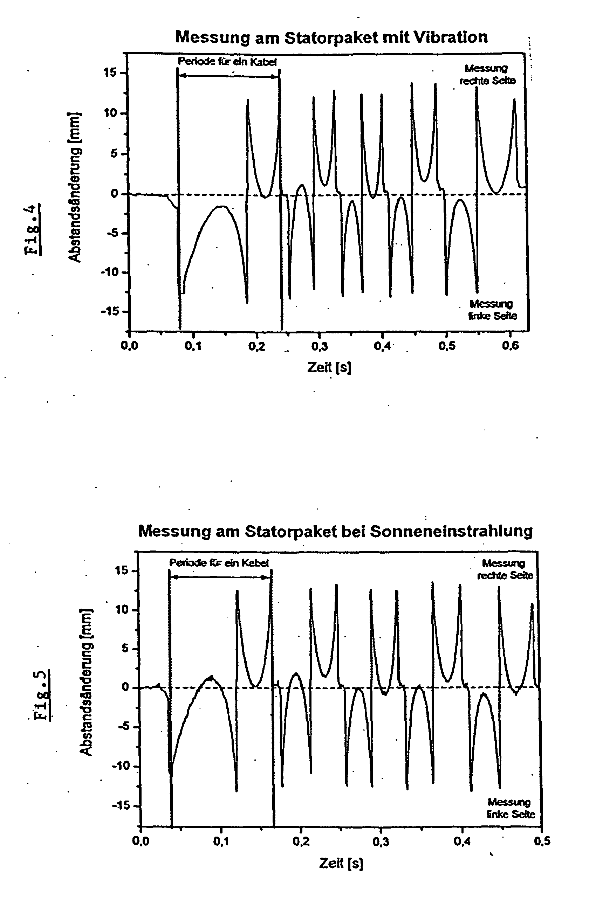

Die Fig.4 zeigt Messdaten für Versuche zur Messung der Motorwicklung-Lage am Statorpaket, wenn künstlich Vibrationen am Statorpaket induziert werden. Auch unter diesen Bedingungen beträgt die absolute Messgenauigkeit <0,1mm. Somit können Kabelverschiebungen für die Kabelführungen 2 und 4 rechte Seite eindeutig identifiziert werden.

Ein weiterer wichtiger Aspekt für praktische Anwendungen dieser Messtechnik ist der mögliche Einfluss von direkter Sonnenlichteinstrahlung auf die Lasertriangulationssensoren 12 und 14.

Wird Sonnenlicht mit auf das Sensorelement 12,14 abgebildet, so erzeugt dieses auf der CCD Zeile 24 ebenfalls ein Messsignal (Untergrund), welches ggf. wesentlich größer ist, als das vom Laser 22 induzierte Streulichtsignal. In diesem Fall ist eine Messung von Oberflächenbeschaffenheiten, d.h. die Bestimmung der LSW-Lage, im Normalfall nicht mehr möglich.

Dieser Untergrund kann durch Verwendung schmalbändiger Interferenzfilter, die nur eine Durchlässigkeit z.B. bei der Laserwellenlänge 650 nm aufweisen, oder geeignete Polarisationsfilter signifikant reduziert werden. Dennoch sollte eine direkte Bestrahlung des Sensorelementes 12,14 mit Sonnenlicht senkrecht zur Sensoroberfläche vermieden werden, auch bei Vorhandensein von den oben genannten Filtern. Der Einsatz einer zylinderförmigen Blende 26 auf dem Sensor 12,14 reduziert weiter Sonnenlichtstreueffekte.

Sind die optischen Triangulationssensoren gemäß den Figuren 1,2 oder 3 an der Unterseite des Statorpaketes angebracht, wie es bei der praktischen Anwendung beim Transrapid erfolgen kann, dann ist auch eine direkte Bestrahlung der Sensoren mit Sonnenlicht ausgeschlossen.

Die Fig.5 zeigt Triangulationsmessungen am Statorpaket unter Sonnenlichtbestrahlung. Geringe geometrische Verschiebungen, <1mm, der Motorwicklung-Lage können auch unter diesen Bedingungen problemlos identifiziert werden.

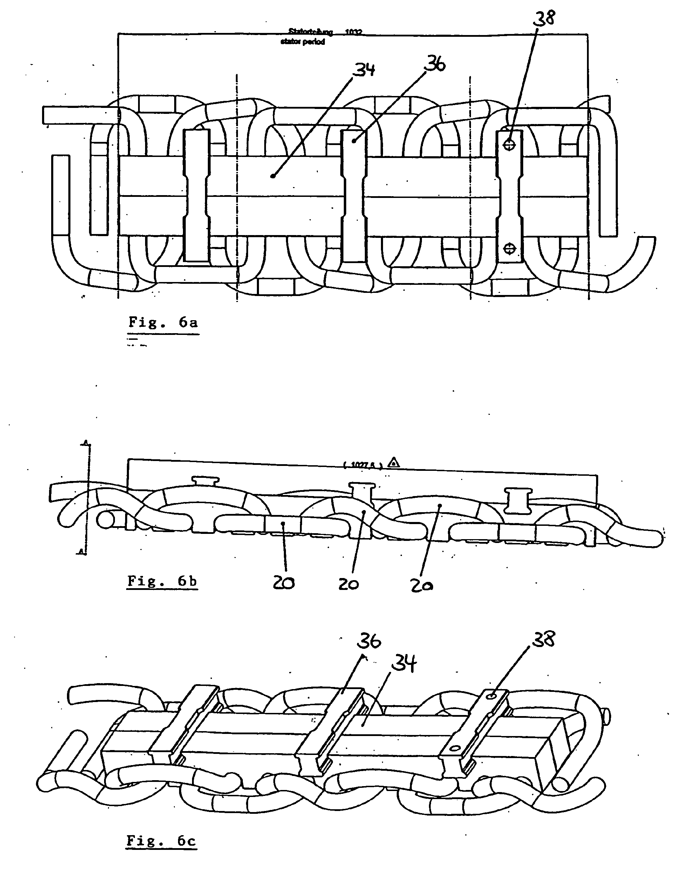

In den Figuren 6a bis 6c sind verschiedene Ansichten eines einzelnen Statorpaketes 34 dargestellt. Dabei wird jedes Statorpaket 34 bei den gezeigten Statorpaketen 34 mittels Traversen 36 gehalten. Diese Traversen 36 werden über Bolzen an dem unterem Bereich des Fahrwerks befestigt, allerdings zurzeit unter Verwendung einer zusätzlichen Redundanz. Diese Redundanz besteht darin, dass in dem unteren Tragwerkbereich des Fahrweges Stahlteile mit schwalbenschwanzförmigen Nuten befestigt sind, in die die freien ebenfalls schwalbenschwanzförmig (negativ) ausgebildeten Längsseiten der Traversen 36 eingreifen. Die Redundanz besteht dabei darin, dass schwalbenschwanzförmigen Nuten eine derartige Höhe aufweisen, dass bei einem Bruch einer Schraube oder beider Schrauben einer Traverse 36, die Traverse 36 sich um maximal 2 mm absenken kann und immer noch von dem in dem Beton-/ Stahltragwerk befestigte Redundanzteil mit ausgearbeiteter Nut gehalten wird.

Aus Sicherheitsgründen besteht die Befestigung derzeit für das Statorpaket 34 aus drei Traversen 36 mit jeweils zwei M-20 Schrauben, die in den Beton- / Stahltragwerk des Fahrwegs eingebracht werden.

Bezüglich der Schraubköpfe ist dabei zu sagen, dass jedes Statorpaket 34 mittels drei kraftschlüssig eingebauten Traversen 36 und jeweils zwei M-20 Schrauben mit dem Tragwerk befestigt ist. Diese Befestigung besitzt sehr hohe Sicherheitsbeiwerte, da rechnerisch vier Schrauben der Größe M-12 ausreichend wären. Es ist aber dennoch zu bemerken, dass die Schrauben nur infolge von Materialfehlern oder des Verlustes der Vorspannung versagen. Dann entstehen Biegekräfte, die dazu führen können, dass die Schraube bricht. Weil bisher kein System gefunden wurde, dass das sichere Vorhandensein der Schraubvorspannung detektiert, sind Redundanzen in Form einer Schwalbennut eingebaut worden, die sich in dem Beton-/Stahlteil des Tragwerkes befinden. Dadurch wird bewirkt, dass im Falle eines Versagens eines oder mehrer Bolzen, das Statorpaket sich lediglich vertikal um weniger als 2 mm senken kann und in der Redundanz gehalten wird. Bekanntlich ist ein unkontrolliertes Absenken eines Statorpakets über 4-5 mm ein äußerst ernster Gefahrenpunkt, da es dann zu Kollision mit dem Fahrzeug mit all den bereits bekannten Konsequenzen kommt.

Die Detektion der Schraubenköpfe kann aber so von statten gehen, dass lediglich ein Vorhandensein oder Nichtvorhandensein des Kopfes erfasst werden muss, um die notwendigen Maßnahmen dann treffen zu können.

Eine derartige Detektion dieser Traversenschrauben kann die Redundanz zur Halterung der Traverse völlig unnötig machen. Daraus folgt, dass mit Hilfe dieses Überprüfens der Schraubköpfe die Schwebebahntrasse mit erheblich geringerem Aufwand hergestellt werden kann, da dann keine Redundanzteile mit Schwalbenschwanznuten in den Beton-/Stahltragwerg mehr befestigt werden müssen und auch die Traversen keine diese Schwalbenschwanznut entsprechende Form zu haben brauchen. Es werden dann im Wesentlichen außerhalb des Statorkörpers quaderförmige Traversen Verwendung finden können.

Die optische Triangulation mit der beschriebenen Anordnung gem. Fig.1 - 3 lässt sich zur berührungslosen Bestimmung der Position der Motorwicklungs-Lage am Statorpaket unter folgenden Bedingungen erfolgreich einsetzen:
- Die Triangulationssensoren 12,14 sollten möglichst eine Abtastrate von mindestens 20 kHz aufweisen, damit eine Geschwindigkeit des Messfahrzeugs von >110 kmh⁻¹ gewährleistet ist, und die erzielte Genauigkeit der Tiefenauflösung ist besser als 0,2mm. Durch Einsatz von gepulsten Mikrochiplasern 22 gemäß Anordnung nach Fig.2 oder 3 können deutlich höhere Abtastraten erreicht werden.
- Beträgt der Messabstand zwischen Sensor-Statorpaket <15cm, so sind Einflüsse von Wasserdampf, Regen und Sprühnebel, tolerierbar, die erzielbare Genauigkeit der Tiefenauflösung beträgt <0,35mm.
- Die Belegung der Optiken (Fenster) der Sensoren 12,14 mit Verunreinigungen kann durch geeignet geformte Anströmungen während des Fahrbetriebs mit Umgebungsluft gereinigt werden.
- Sonnenlicht beeinflusst die Messgenauigkeit der beschriebenen Anordnung nicht, insbesondere wenn Interferenz- und/oder Polarisationsfilter vor dem Sensor 12,14 verwendet werden. Eine zylinderförmige Blende 26 vor dem Sensor 12,14 verhindert zusätzlich eingestreutes Sonnenlicht.
- Die erfindungsgemäße, versetzte Anordnung von mindestens 2 Sensoren 12,14, die abwechselnd als Mess- und Referenzsensor fungieren, dient sehr effizient der Kompensation von mechanischen Störungen/Vibrationen.
- Die in den Fig.1 - 3 gezeigten Systemanordnungen lassen sich an einem Servicefahrzeug und/oder einer Sektion des Transrapid-Fahrzeugs anbringen, so dass die Motorwicklungs-Lage routinemäßig vermessen werden kann.

Die Rohdaten können über eine AD Wandlerkarte in einen Notebook PC eingelesen werden, dort entsprechend weiterverarbeitet, und die absolut bestimmten Kabelpositionen für die linke und rechte Seite des Statorpaketes werden anschließend in einer Datei abgelegt, die als Messprotokoll dient. Die jeweiligen Kabelführungen bzw. Statornuten 32 werden fortlaufend nummeriert, so dass lokale abweichungen der Kabelposition der entsprechenden Kabel-Lage im Statorpaket zugeordnet werden können. Die aufgezeigten Daten dienen der Dokumentation der hergestellten Qualität eines mit der Motorwicklung belegten Statorpakets bereits unmittelbar nach der Produktion als auch der Routineüberwachung der Transrapidstrecke in Verbindung mit einem Servicefahrzeug.

### Bezugszeichenliste:

- 10: Triangulationssystem
- 12: 1. Triangulationssensor/Sensor
- 14: 2. Triangulationssensor/Sensor
- 16: Träger
- 18: Fahrweg
- 20: Stator/Statorkabel
- 20a: Kabelführung
- 22: Strahlquelle
- 24: CCD-Zeile
- 26: Optik
- 28: Lichtschnitt
- 30: Lichtleiterbündel
- 32: Statornut
- 34: Statorpaket
- 36: Traverse
- 38: Schraubenbohrung

## Patentansprüche

1. Verfahren zum berührungslose Messen mittels Messeinrichtungen, bei dem ein Versatz der Funktionskomponenten eines Fahrweges (18) einer mit einem Linearmotor angetriebenen Magnetschwebebahn mittels mindestens eines entlang des Fahrwegs (18) verfahrbaren optischen Triangulationssystems (10) gemessen wird, wobei mindestens zwei an einem verfahrbaren Träger (16) fest montierte und geometrisch versetzte Triangulationssensoren (12,14) je Messeinrichtung für die Funktionskomponenten mit einer bestimmbaren Geschwindigkeit entlang des Fahrwegs (18) bewegt werden, **dadurch gekennzeichnet, dass** dabei die Triangulationssensoren (12,14) alternierend als Mess- und als Referenzsensor (12, 14) arbeiten, und zwar mit einer Strahlenquelle (22) im ultravioletten, sichtbaren oder infraroten Spektralbereich, wobei das diffus reflektierte Licht unter einem bestimmten Beobachtungswinkel aufgenommen und die Position des auf dem Mess-Sensor (12,14) auftreffenden Lichtes zur Versatzbestimmung verwandt wird, und zwar mit einer Abtastrate, die Messpunkte im Raster < 1,5 mm detektiert.

2. Verfahren nach Anspruch 1, **dadurch gekennzeichnet, dass** die Funktionskomponenten Statorpakete (34) oder Seitenführungsschienen sind und der Träger (16) mit einem Messaufbau entlang verfahren wird.

3. Verfahren nach Anspruch 2, **dadurch gekennzeichnet, dass** mindestens durch eine Messposition entlang der Außenseite des Statorpaketes (34) verfahren wird.

4. Verfahren nach einem der Ansprüche 1 bis 3, **dadurch gekennzeichnet, dass** die Verfahrensgeschwindigkeit des Trägers (16) mindestens 100 km/h beträgt.

5. Verfahren nach einem der Ansprüche 2 bis 4, **dadurch gekennzeichnet, dass** mit einem Messabstand zwischen Sensor (12,14) und Statorpaket (34) kleiner oder gleich 25 cm gemessen wird.

6. Verfahren nach einem der Ansprüche 1 bis 5, **dadurch gekennzeichnet, dass** die bei der Messung verwandte Optiken (26) mit einer Luftausströmung beaufschlagt werden.

7. Verfahren nach einem der Ansprüche 1 bis 6, **dadurch gekennzeichnet, dass** vor dem Lichteintritt in die Optiken (26) das Licht optisch gefiltert oder durch eine Spaltanordnung geleitet wird.

8. Verfahren nach einem der Ansprüche 1 bis 7, **dadurch gekennzeichnet, dass** ein Lichtschnitt zur Bestrahlung des Statorpakets/Motorwicklung oder der Schraubenköpfe der Schrauben, die über Traversen (36) die Statorpakete (34) mit den Trägerelementen (16) verbinden, oder Statorpaketversätze oder Seitenführschienenversätze verwendet wird, und nur eine Strahlquelle (22) eingesetzt wird sowie die Signaldetektion mit einer CCD-Zeile (24) im Beobachtungswinkel 30°-45° bezogen auf die Richtung der Anregung erfolgt.

9. Verfahren nach einem der Ansprüche 1 bis 7, **dadurch gekennzeichnet, dass** ein Lichtleiterbündel (30) für Beleuchtung und Detektion der Motorwicklungs-Lage am Statorpaket (34) für Statorpaketversätze am Trägerübergang oder Seitenführungsschienenversätze am Trägerübergang oder der Schraubenköpfe der Schrauben, die über Traversen (36) die Statorpakete (34) mit den Trägerelementen (16) verbinden, eingesetzt wird, wobei für sämtliche Sensorelemente (12,14) nur eine Strahlquelle (22) eingesetzt wird und der Winkel zwischen Anregungs- und Beobachtungsfasern im Bereich von 30°-45° liegt.

10. Verfahren nach einem der Ansprüche 1 bis 9, **dadurch gekennzeichnet, dass** die Strahlquelle (22) kontinuierlich oder gepulst arbeitet.

11. Verfahren nach einem der Ansprüche 1 bis 10, **dadurch gekennzeichnet, dass** die Signaldetektion über ein optoelektrisches Sensorelement erfolgt, wobei das Sensorelement eine CCD oder eine positionsempfindliche Diode ist.

12. Verfahren nach einem der Ansprüche 1 bis 12, **dadurch gekennzeichnet, dass** das Sensorsystem auf einem Messfahrzeug oder einer Sektion eines Magnetschwebefahrzeuges zur routinemäßigen Erfassung der Motorwicklungslage oder der Statorpaketversätze am Trägerübergang oder der Seitenführungsschienenversätze am Trägerübergang oder der Schraubenköpfe der Schrauben, die über Traversen (36) die Statorpakete (34) mit den Trägerelementen (16) verbinden, angeordnet wird.

13. Verfahren nach einem der Ansprüche 1 bis 12, **dadurch gekennzeichnet, dass** das Sensorsystem (12,14) das Statorpaket (34) von unten und die Seitenführungsschienen von der Seite beleuchtet.

14. Verfahren nach einem der Ansprüche 1 bis 13, **dadurch gekennzeichnet, dass** das Sensorsystem (12,14) zur Vermessung der Statorlage und der Motorwicklungslage direkt bei der Ausrüstung der Fahrwegträger mit den Funktionskomponenten zur Qualitätskontrolle eingesetzt wird.

15. Verfahren nach einem der Ansprüche 1 bis 14, **dadurch gekennzeichnet, dass** das Sensorsystem zur Vermessung der Statorpaketlage, der Seitenführungsschienenversätze und der Motorwicklungslage oder der Schraubenköpfe der Schrauben, die über Traversen(36) die Statorpakete (34) mit den Trägerelementen (16) verbinden, nach der Errichtung des Fahrwegs (18) auf der Baustelle zur Qualitätskontrolle eingesetzt wird.

16. Verfahren nach einem der Ansprüche 1 bis 15, **dadurch gekennzeichnet, dass** das Sensorsystem zur Vermessung der Statorpaketlage, der Seitenführungsschienenversätze und der Erfassung der Schraubenköpfe der Schrauben, die über Traversen (36) die Statorpakete (34) mit den Trägerelementen (16) verbinden, der Motorwicklungslage als Routinemessung während der betriebsfreien Zeiten mittels des Servicefahrzeugs oder einer Magnetschwebesektion eingesetzt wird.

17. Verfahren nach einem der Ansprüche 1 bis 16, **dadurch gekennzeichnet, dass** die Strahlenquelle (22) eine Laserquelle ist.

18. Verfahren nach einem der Ansprüche 1 bis 17, **dadurch gekennzeichnet, dass** die Magnetschwebebahn ein Transrapid ist.

## Claims

1. Method for contactless measurement by means of measuring devices, wherein an offset of the functional components of a travel path (18) of a magnetic levitation train driven by a linear motor is measured by at least one optical triangulation system (10) movable along the travel path (18), wherein at least two triangulation sensors (12, 14), fixedly mounted on a movable carrier (16) and geometrically offset, for each measuring device for the functional components are moved at a determinable speed along the travel path (18), **characterised in that** the triangulation sensors (12, 14) operate alternatingly as a measuring sensor and as a reference sensor (12, 14), namely with a radiation source (22) in the ultraviolet, visible or infrared spectral range, wherein the diffusely reflected light is detected at a certain observation angle and the position of the light impinging on the measuring sensor (12, 14) is used for determining the offset, namely with a sensing rate which detects the measuring points in a grid of < 1.5 mm.

2. Method as claimed in Claim 1, **characterised in that** the functional components are stator packs (34) or lateral guide rails and the carrier (16) is moved along with a measuring system.

3. Method as claimed in Claim 2, **characterised in that** moving is effected at least through one measuring position along the external side of the stator pack (34).

4. Method as claimed in any one of Claims 1 to 3, **characterised in that** the moving speed of the carrier (16) is at least 100 km/h.

5. Method as claimed in any one of Claims 2 to 4, **characterised in that** measuring is effected with a measuring distance between the sensor (12, 14) and stator pack (34) less than or equal to 25 cm.

6. Method as claimed in any one of Claims 1 to 5, **characterised in that** optical systems (26) used for measurement are subjected to an air outflow.

7. Method as claimed in any one of Claims 1 to 6, **characterised in that** the light is optically filtered or is passed through a slit arrangement before the light enters the optical systems (26).

8. Method as claimed in any one of Claims 1 to 7, **characterised in that** a light section is used for irradiation of the stator pack/motor winding or the screw heads of the screws, which connect the stator packs (34) to the support elements (16) via transverse beams (36), or stator pack offsets or lateral guide rail offsets, and only one radiation source (22) is used, and the signal is detected by a CCD line (24) at an observation angle of 30°-45° relative to the direction of excitation.

9. Method as claimed in any one of Claims 1 to 7, **characterised in that** an optical fibre bundle (30) is used for illumination and detection of the motor winding position on the stator pack (34) for stator pack offsets on the support junction or lateral guide rail offsets on the support junction or the screw heads of the screws, which connect the stator packs (34) to the support elements (16) via transverse beams (36), wherein for all sensor elements (12, 14) only one radiation source (22) is used and the angle between excitation fibres and observation fibres is in the range of 30°-45°.

10. Method as claimed in any one of Claims 1 to 9, **characterised in that** the radiation source (22) operates continuously or in a pulsed fashion.

11. Method as claimed in any one of Claims 1 to 10, **characterised in that** the signal is detected via an opto-electrical sensor element, wherein the sensor element is a CCD or a position-sensitive diode.

12. Method as claimed in any one of Claims 1 to 12, **characterised in that** the sensor system is disposed on a measuring vehicle or a section of a magnetic levitation vehicle for routine detection of the motor winding position or the stator pack offsets on the support junction or the lateral guide rail offsets on the support junction or the screw heads of the screws, which connect the stator packs (34) to the support elements (16) via transverse beams (36).

13. Method as claimed in any one of Claims I to 12, **characterised in that** the sensor system (12, 14) illuminates the stator pack (34) from below and the lateral guide rails from the side.

14. Method as claimed in any one of Claims I to 13, **characterised in that** the sensor system (12, 14) for measuring the stator position and the motor winding position is used for quality control immediately upon providing the travel path supports with the functional components.

15. Method as claimed in any one of Claims 1 to 14, **characterised in that** the sensor system is used for measuring the stator pack position, the lateral guide rail offsets and the motor winding position or the screw heads of the screws, which connect the stator packs (34) to the support elements (16) via transverse beams (36), for quality control after installation of the travel path (18) at the construction site.

16. Method as claimed in any one of Claims 1 to 15, **characterised in that** the sensor system is used for measuring the stator pack position, the lateral guide rail offsets, and for detecting the screw heads of the screws, which connect the stator packs (34) to the support elements (16) via transverse beams (36), the motor winding position as a routine measurement during shutdown periods by a service vehicle or a magnetic levitation section.

17. Method as claimed in any one of Claims 1 to 16, **characterised in that** the radiation source (22) is a laser source.

18. Method as claimed in any one of Claims 1 to 17, **characterised in that** the magnetic levitation train is a Transrapid.

## Revendications

1. Procédé de mesure sans contact, à l'aide de dispositifs de mesure, selon lequel un décalage des composants fonctionnels d'une voie (18) d'un train à sustentation magnétique entraîné par un moteur linéaire est mesuré à l'aide d'au moins un système de triangulation optique (10) mobile le long de la voie (18), étant précisé qu'au moins deux capteurs de triangulation (12, 14) montés de manière fixe sur un support mobile (16) et décalés géométriquement, pour chaque dispositif de mesure pour les composants fonctionnels, sont déplacés le long du parcours (18) à une vitesse apte à être définie, **caractérisé en ce que** les capteurs de triangulation (12, 14) fonctionnent en alternance comme capteurs de mesure et capteurs de référence (12, 14), et ce avec une source de rayons (22) dans la plage spectrale ultraviolette, visible ou infrarouge, étant précisé que la lumière réfléchie de manière diffuse est enregistrée sous un angle d'observation défini, et la position de la lumière qui arrive sur le capteur de mesure (12, 14) est convertie pour définir le décalage, et ce à une vitesse d'exploration qui détecte les points de mesure dans la trame <1,5 mm.

2. Procédé selon la revendication 1, **caractérisé en ce que** les composants fonctionnels sont des paquets de tôles stator (34) ou des rails de guidage latéraux, et le support (16) est déplacé avec une structure de mesure.

3. Procédé selon la revendication 2, **caractérisé en ce que** le déplacement a lieu grâce au moins à une position de mesure le long du côté extérieur du paquet de tôles stator (34).

4. Procédé selon l'une des revendications 1 à 3, **caractérisé en ce que** la vitesse de déplacement du support (16) est d'au moins 100 km/h.

5. Procédé selon l'une des revendications 2 à 4, **caractérisé en ce que** la mesure est réalisée avec un écart de mesure entre le capteur (12, 14) et le paquet de tôles stator (34) inférieur ou égal à 25 cm.

6. Procédé selon l'une des revendications 1 à 5, **caractérisé en ce que** les systèmes optiques (26) utilisés lors de la mesure sont sollicités par un écoulement d'air.

7. Procédé selon l'une des revendications 1 à 6, **caractérisé en ce qu'**avant l'entrée de lumière dans les systèmes optiques (26), la lumière est soumise à un filtrage optique ou traverse un dispositif de séparation.

8. Procédé selon l'une des revendications 1 à 7, **caractérisé en ce qu'**une coupe optique est utilisée pour l'exposition du paquet de tôles stator/de l'enroulement de moteur ou des têtes des vis qui relient les paquets de tôles stator (34) aux éléments de support (16) par l'intermédiaire de traverses (36), ou des décalages de paquet de tôles stator ou des décalages de rails de guidage latéraux sont utilisés, et seule une source de rayons (22) est utilisée, et la détection de signaux se fait avec une ligne de CCD (24) suivant un angle d'observation de 30°-45° par rapport au sens d'excitation.

9. Procédé selon l'une des revendications 1 à 7, **caractérisé en ce qu'**un faisceau de conducteurs de lumière (30) est utilisé pour éclairer et détecter la position d'enroulement de moteur sur le paquet de tôles stator (34) pour les décalages de paquet de tôles stator au niveau de la transition de support ou pour les décalages de rails de guidage latéraux au niveau de la transition de support, ou des têtes des vis qui relient les paquets de tôles stator (34) aux éléments de support (16) par l'intermédiaire de traverses (36), étant précisé que pour tous les éléments capteurs (12, 14) on n'utilise qu'une source de rayons (22) et que l'angle entre les fibres d'excitation et les fibres d'observation est situé dans la plage de 30°-45°.

10. Procédé selon l'une des revendications 1 à 9, **caractérisé en ce que** la source de rayons (22) fonctionne de manière continue ou pulsée.

11. Procédé selon l'une des revendications 1 à 10, **caractérisé en ce que** la détection de signaux se fait par l'intermédiaire d'un élément capteur opto-électrique, l'élément capteur étant constitué par un CCD ou par une diode sensible à la position.

12. Procédé selon l'une des revendications 1 à 12, **caractérisé en ce que** le système capteur est disposé sur un véhicule de mesure ou sur une section d'un véhicule à sustentation magnétique pour un relevé de routine de la position d'enroulement de moteur ou des décalages de paquet de tôles stator au niveau de la transition de support ou des décalages de rails de guidage latéraux au niveau de la transition de support ou des têtes des vis qui relient les paquets de tôles stator (34) aux éléments de support (16) par l'intermédiaire de traverses (36).

13. Procédé selon l'une des revendications 1 à 12, **caractérisé en ce que** le système de capteurs (12, 14) éclaire le paquet de tôles stator (34) par-dessous, et les rails de guidage latéraux par le côté.

14. Procédé selon l'une des revendications 1 à 13, **caractérisé en ce que** le système de capteurs (12, 14) pour mesurer la position de stator et la position d'enroulement de moteur est utilisé pour le contrôle de qualité directement au niveau de l'équipement des supports de voie avec les composants fonctionnels.

15. Procédé selon l'une des revendications 1 à 14, **caractérisé en ce que** le système de capteurs pour mesurer la position de paquet de tôles stator, les décalages de rails de guidage latéraux et la position d'enroulement de moteur ou des têtes des vis qui relient les paquets de tôles stator (34) aux éléments de support (16) par l'intermédiaire de traverses (36) est utilisé pour le contrôle de qualité après l'installation de la voie (18) sur le chantier.

16. Procédé selon l'une des revendications 1 à 15, **caractérisé en ce que** le système de capteurs pour mesurer la position de paquet de tôles stator, les décalages de rails de guidage latéraux, le relevé des têtes des vis, qui relient les paquets de tôles stator (34) aux éléments de support (16) par l'intermédiaire de traverses (36), et la position d'enroulement de moteur est utilisé comme mesure de routine pendant les temps sans fonctionnement, à l'aide du véhicule de service ou d'une section de sustentation magnétique.

17. Procédé selon l'une des revendications 1 à 16, **caractérisé en ce que** la source de rayons (22) est constituée par une source laser.

18. Procédé selon l'une des revendications 1 à 17, **caractérisé en ce que** le train à sustentation magnétique est constitué par un Transrapid.
